# EUROPEAN PATENT APPLICATION

(11) **EP 4 815 444 A1**
(43) Date of publication of application: **30.09.2026**
(21) Application number: 25305460.5
(22) Date of filing: 28.03.2025
(51) Int. Cl.: H04N 19/117, H04N 19/136, H04N 19/14, H04N 19/176, H04N 19/46, H04N 19/85

(54) **FILM GRAIN SCALING FUNCTION ESTIMATION IMPROVEMENTS**

(71) Applicant: InterDigital CE Patent Holdings, SAS, 75017 Paris (FR)
(72) Inventor: RADOSAVLJEVIC, Milos, 35000 RENNES (FR); LEFEBVRE, Frederic, 35000 RENNES (FR); AMEUR, Zoubida, 35510 CESSON SEVIGNE (FR); DE LAGRANGE, Philippe, 35830 BETTON (FR)
(74) Representative: Vossius & Partner Patentanwälte Rechtsanwälte mbB

(57) **Abstract**

Systems, methods, and instrumentalities are disclosed for film grain scaling function estimation improvements. For example, a video processing device may obtain current film grain characteristics data associated with a current picture. The video processing device may obtain aggregated film grain characteristics data associated with a plurality of previous pictures. A film grain model may be determined for the current picture based on the current film grain characteristics data associated with a current picture and the aggregated film grain characteristics data associated with a plurality of previous pictures. The video processing device may include an indication of the determined film grain model for the current picture. In examples, the video processing device may combine the aggregated film grain characteristics data with the current film grain characteristics data. The film grain analysis may be performed based on the combined film grain characteristics data.

## Description

### BACKGROUND

The present application is related to coding systems (e.g., video coding systems) that may be used to compress digital signals (e.g., video signal signals) to reduce the storage and/or transmission bandwidth needed for such signals. Coding systems may include, for example, block-based, wavelet-based, and/or object-based systems.

### SUMMARY

Systems, methods, and instrumentalities are disclosed for film grain scaling function estimation improvements. For example, a video processing device (e.g., a video pre-processing device or video encoding device) may obtain current film grain characteristics data associated with a current picture. The video processing device may obtain aggregated film grain characteristics data associated with a plurality of previous pictures. A film grain model (e.g., which may include a plurality of film grain model parameter(s)) may be determined for the current picture based on the current film grain characteristics data associated with a current picture and the aggregated film grain characteristics data associated with a plurality of previous pictures. The video processing device may include an indication (e.g., within a video bitstream and/or within a supplement enhancement (SEI) message) of the determined film grain model for the current picture. In examples, the video processing device may combine the aggregated film grain characteristics data with the current film grain characteristics data. The film grain analysis (e.g., which may estimate a scaling function) may be performed based on the combined film grain characteristics data. The film grain model for the current picture may be determined based on the film grain analysis.

In examples, aggregated film grain characteristics data may include first sub-interval aggregated film grain characteristics data and second sub-interval aggregated film grain characteristics data. sub-interval division of the current film grain characteristics data may be used to generate first sub-interval current film grain characteristics data and second sub-interval current film grain characteristics data. The combined film grain characteristics data may be constructed by adding the first sub-interval current film grain characteristics data to the first sub-interval aggregated film grain characteristics data and the second sub-interval current film grain characteristics data to the second sub-interval aggregated film grain characteristics data.

In examples, the video processing device may determine a first number of data associated with the first sub-interval aggregated film grain characteristics data and a second number of data associated with the second sub-interval aggregated film grain characteristics. The first number of data and the second number of data may be stored in a reference buffer. A first average value of the first sub-interval aggregated film grain characteristics data may be determined and a second average value of the second sub-interval aggregated film grain characteristics data may be determined. The first average value and the second average value may be stored in the reference buffer. In examples, the stored first average value may be multiplied by the stored first number of data and the stored second average value may be multiplied by the stored second number of data. The combined film grain characteristics data may be constructed by adding the multiplied values of the first sub-interval aggregated film grain characteristics data and the stored first number of data to the first sub-interval current film grain characteristics data and adding the multiplied values of the second sub-interval aggregated film grain characteristics data to the second sub-interval current film grain characteristics data.

In examples, first sub-interval current film grain characteristics data include at least one of a first current average of a plurality of intensities, a first current average of a plurality of grain strengths, a first current sum of a plurality of grain strengths, a first current sum of a plurality of intensities, or a first current number of data. In examples, second sub-interval current film grain characteristics data include at least one of a second current average of a plurality of intensities, a second current average of a plurality of grain strengths, a second current sum of a plurality of grain strengths, a second current sum of a plurality of intensities, or a second current number of data. The first sub-interval aggregated film grain characteristics data may include at least one of a first aggregated average of plurality of intensities, a first aggregated average of a plurality of grain strengths, a first aggregated sum of a plurality of grain strengths, a first aggregated sum of a plurality of intensities, or a first aggregated number of data. The second sub-interval aggregated film grain characteristics data may include at least one of a second aggregated average of plurality of intensities, a second aggregated average of a plurality of grain strengths, a second aggregated sum of a plurality of grain strengths, a second aggregated sum of a plurality of intensities, or a second aggregated number of data.

The combined film grain characteristics may be constructed by adding a first aggregated number of data to the first current number of data and adding the second number of data to the second current number of data. The combined film grain characteristics may be constructed by adding the first aggregated average of the plurality of intensities to the first current average of the plurality of intensities and the first aggregated average of the plurality of grain strengths to the first current average of the plurality of grain strengths and by adding the second aggregated average of the plurality of intensities to the second current average of the plurality of intensities and the second aggregated average of the plurality of grain strengths to the second current average of the plurality of grain strengths. The combined film grain characteristics may be constructed by adding the first aggregated sum of the plurality of grain strengths to the first current sum of the plurality of grain strengths and the first aggregated number of data to the first current number of data and by adding the second aggregated sum of the plurality of grain strengths to the second current sum of the plurality of grain strengths and the second aggregated number of data to the second current number of data. The combined film grain characteristics may be constructed by adding the first aggregated sum of the plurality of intensities to the first current sum of the plurality of intensities and the first aggregated number of data to the first current number of data and by adding the second aggregated sum of the plurality of intensities to the second current sum of the plurality of intensities and the second aggregated number of data to the second current number of data.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows an example of film grain statistical coding (modeling and synthesis).
FIG. 5 illustrates example film grain characteristics (FGC) supplemental enhancement information (SEI) parameters.
FIG. 6 illustrates an example film scan.
FIG. 7 illustrates visual examples with cutoff frequencies.
FIG. 8 illustrates example image blocks taking a random window from a template.
FIG. 9 illustrates an example template-based film grain synthesis workflow.
FIG. 10 illustrates an example scaling function f used for local grain amplitude adaptation.
FIG. 11 illustrates an example film grain analysis and parameter estimation.
FIGS. 12A-12H illustrate an example two-pass curve fitting process.
FIG. 13A illustrates an example fitted curve.
FIG. 13B illustrates an example quantized curve.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

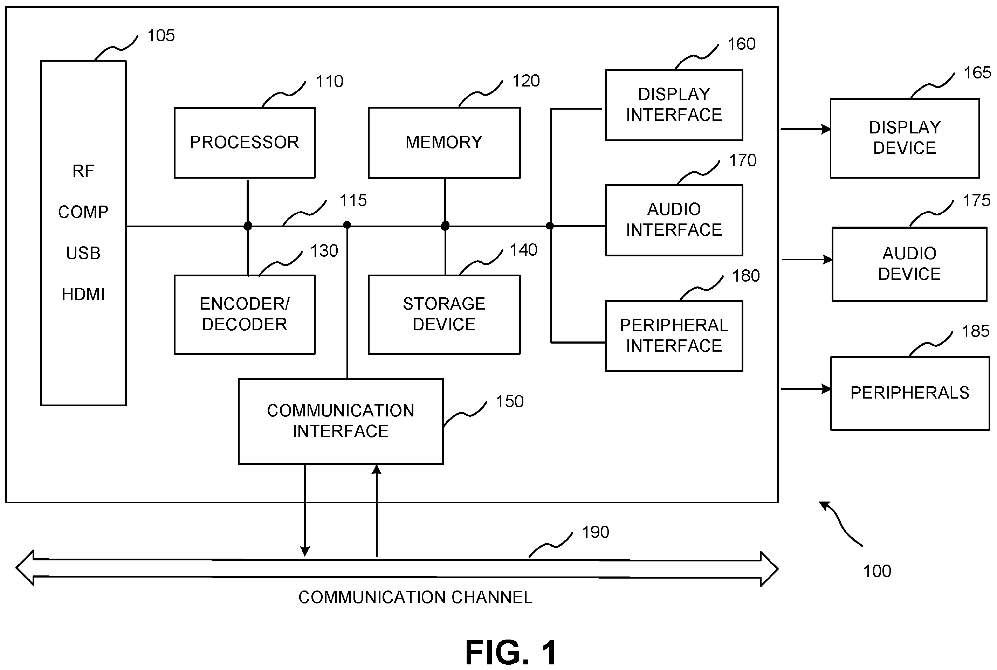

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

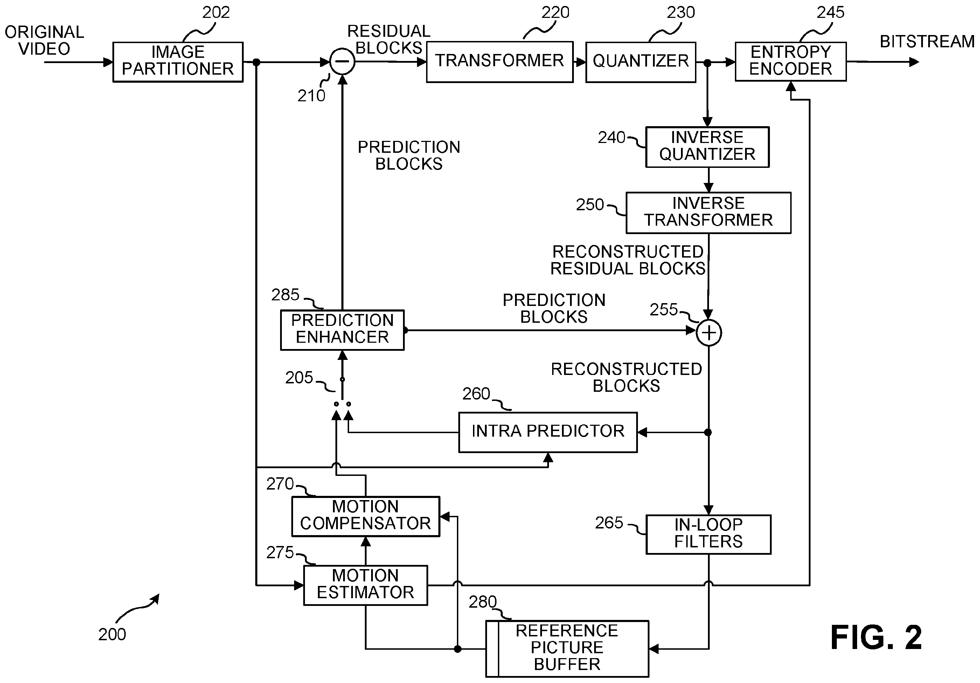

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

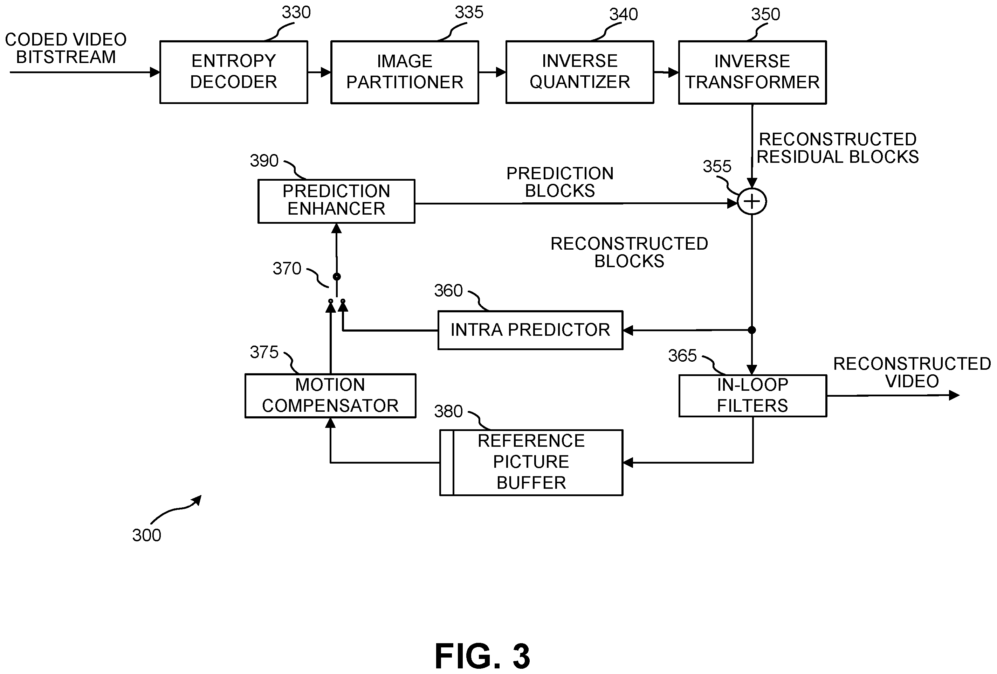

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by *C, Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Features described herein may be associated with film grain analysis. Film grain parameters of a film grain model may be estimated. Analysis process may be described with respect to video codecs and reference software. Features described herein may be used outside the video coding and distribution chain.

Scaling function estimation may be described herein and may be related to handling over time (over the frames) data points used in film grain analysis.

Film grain may be a noise created during the processing of photographic film. Film grain may be naturally present in an analog film due to its nature and may be associated with an analog film type. With the era of digital cameras, the noise has disappeared at the capturing stage and may be added afterwards to the content to recreate a movie look.

The random nature of film grain may be associated with difficulty during compression using an example codec. Encoding tools, such as those chosen for low bit rates, may remove film grain. High bitrates may be associated with keeping and reconstructing film grain with sufficient quality, which may be contrary to the encoding/decoding targets of video applications. Film grain may be modeled before encoding and then added back during a synthesis at decoding. Modeling film grain may not be limited to the video coding standards. The same modeling of the film grain, that may include the analysis of the film grain characteristics and synthesis of the film grain, may be done as a standalone process, e.g., outside of the video compression and distribution chain.

The use of film grain may be used as part of the video distribution chain. Information messages for coded video bitstreams may include syntax and semantics for film grain synthesis. Film grain characteristics (FGC) information message may provide the decoder with a parameterized model for film grain synthesis. Models may include an autoregressive film grain model and a frequency filtering model.

Features described herein may be associated with film grain technical characteristics. The multimedia distribution industry may use celluloid (e.g., analogue) film as the medium for capture, editing and distribution. Content distribution may be associated with analogue technology and digital technologies. Due to its physical nature, analogue film may be associated with an appreciable visual experience. Film grain may include characteristics of analogue film and may be a contributor to the visual appearance of analogue film, e.g., film look or also known as the cinematic look. Film grain may include a product of the physical characteristics of analogue film. Film grain may include spatiotemporal variations in optical density of processed film that results from photographically developing the light-exposed silver-halide crystals dispersed in photographic emulsion. Images may be formed by exposure and the development of the crystals. In color images, where the silver is chemically removed after development, dye clouds (e.g., soft, tiny grains) may be formed on the sites where the silver crystals have been exposed. Grains may be randomly distributed in the resulting image because of the random formation of silver crystals in the original emulsion. The naked eye cannot distinguish individual grains, which are about 2 microns down to about a tenth of that in size. The eye may resolve groups of grains in an image, that an observer identifies as a grainy look that may be referred to as film grain.

Film grain appearance may be inevitable because of the physical nature of the process embedded in the film design itself. Film grain may be considered as noise. The silver-halide crystals described herein may be small (e.g., smaller) and less visible. Due to the physical design and characteristics of analogue film, the grainy look may be visible. With digital camera sensors and their utilization, the grainy look may be reduced (e.g., eliminated). Digital sensors may be associated with visual quality and visual processing (e.g., in order to produce the film look). Film grain may be used as a visual tool (e.g., and not a byproduct of chemical processing as in the case of analogue film stock).

Film grain may include a synthetic film grain that can be added in post-production to digitally captured high-value content for artistic effect or to mask imperfections in digital footage, which may otherwise look too sharp and unnatural. Film grain may be used informally to refer to image sensor noise, such as in low light and high-speed captures.

Perception of moderate grain texture may be a characteristic in motion picture and video productions. The motion picture industry may be associated with the preservation of the grainy appearance of images throughout the image processing and delivery chain. The presence of film grain may help to differentiate real-world images from computer-generated material, which may be created with no film grain. When movies are captured with digital cameras, artificial film grain may be added at a post-processing stage to create a look, which artists may qualify as soft, organic, or living. Synthetic film grain may be used to harmonize capture from different cameras, for example, for mixing film and digital capture and different lighting conditions.

It may be challenging to preserve film grain during video distribution, for example, when targeting low bitrate applications. Compression gains related to temporal prediction may or may not be leveraged because of the random nature of the grain. Film grain noise may be temporally independent, and as a result, motion compensation may or may not be efficiently used for its prediction. The grain may appear at high spatial frequencies and may be filtered with noise by in-loop filters or due to the quantization process.

This may be apparent with coding formats, as bitrate gains may be associated with noise elimination. The introduction of pre-filtering in the video distribution chain may potentially remove film grain prior to compression. The use of quantization matrices may assist in the preservation of some of the film grain within the video content. This may have limitations, such as at lower bitrates and for streaming applications.

Within some encoding/decoding systems, film grain modeling may include the following parts. On the encoder side, film grain technology may provide means to denoise and/or analyze source video to improve compression and to determine statistical characteristics of the film grain to be synthesized at the decoder. This part may be skipped, and model parameters may be provided manually, for example, hand-tuned to mimic a film grain look. At the decoder side, film grain technology may provide the means to synthesize and blend film grain with the decoded video. These steps may not be limited to the encoder/decoder, as film grain modeling may exist outside of the video coding chain.

It may be determined that removing the film grain by filtering the content, compressing, and providing information that enables the regeneration of the film grain (e.g., even if that is just an approximation) may result in more efficient coding performance and a better visual outcome. This may be referred to as film grain modelling.

To synthesize grain, use of light-dependent film grain model parameters may be useful, for example, for the simulation of photographic film grain, as photographic film grain may be intrinsically light intensity (exposure) dependent. A variation of film opacity may be the result of a variation of grain density, which may have an impact on the perceived grain. Film may be organized in layers (e.g., three) for a color component, with light sensitivities to achieve its full dynamic range. Light-sensitive crystals may have a distribution of sizes. Larger crystals may capture more photons and may be more likely to be exposed than smaller crystals, particularly in darker regions. This may result in a dependency of the noise characteristics on brightness.

A model may be considered to have a capability to reproduce a variety of grain shapes (e.g., appearances or film grain types) and to adapt grain strength according to the image characteristics. In examples, within one image, it may be useful to have different image regions with different grain characteristics or no grain. For example, region-dependent film grain characteristics may be employed.

The following film grain use cases are presented below (e.g., focused on video compression and distribution).

An example case of film grain synthesis may relate to artistic intent: recreate the film grain at the decoder side, which may have been lost by compression involved in content distribution at practical bitrates. The film grain may be considered an aspect of the video, and the content provider may want it to be part of the user experience. Preserving film grain through video compression may use (e.g., high) bitrates for certain applications such as adaptive streaming and broadcasting. Removing film grain may allow using the full potential of video compression technologies, while including film grain synthesis after decoding.

An example use case, which may complement an example use case described herein, may involve the masking of compression impairments (e.g., blocking, banding, mosquito noise, etc.), including impairments due to quantization. If there is no artistic intent, the constraints on film grain model accuracy may be relaxed. The encoder may adjust film grain parameters to fit the coding parameters, so that the intended defect masking is effective (for example, by adjusting noise amplitude based on quantization step sizes).

The use of film grain modelling technologies may be beneficial for image and video compression by potentially providing improved subjective quality at a lower bitrate for certain types of video content. For example, these technologies may be associated with benefitting video content that includes noise, such as film grain or image sensor noise.

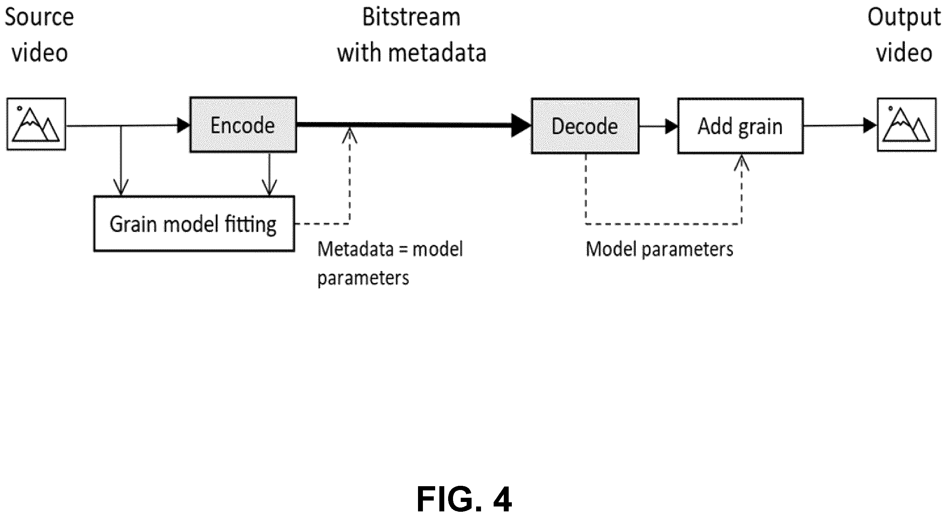

FIG. 4 shows an example of film grain statistical coding (modeling and synthesis). A technique to preserve film grain may be to use statistical encoding instead of native video encoding as pixels. This may determine a statistical model that could represent film grain, finding model parameters fitting the characteristics of the grain that may be removed by video compression, conveying model parameters in the video bitstream, and synthesizing film grain accordingly after video decoding, as illustrated in FIG. 4. Features described herein may have an impact on grain fidelity.

Film grain modelling technologies may provide a means of optionally removing noise prior to or during the encoding process to improve compression efficiency and may reconstruct an approximation of the film grain during or after the decoding process. It may also be used to add visual noise to decoded video to mask or attenuate the visibility of compression artefacts. Visually pleasant noise may be added to the decoded video for example, if the source video had no visible noise/film grain, to help fulfill the masking task described herein.

Metadata may be embedded in video bitstreams. Video coding standards may enable embedding of metadata in video bitstreams through supplemental enhancement information (e.g., SEI) messages.

Video coding specifications may allow embedding metadata that describes film grain characteristics as parameters of a statistical model. This model may determine grain strength and spatial properties as a function of picture sample value/intensity (e.g., parameters may be different for each color component). Spatial properties may be described as frequency cutoffs or coefficients of a 2D autoregressive filter. This model may be used to describe the grain present in the source video, which is potentially lost in the encoded bitstream. A decoder may use the model to add synthetic grain on top of the decoded video, recovering a grainy aspect as close as possible to the original.

Film grain characteristics may be described using a film grain characteristics (FGC) SEI message; the model used may be based on intensity intervals, with model parameters (e.g., strength and spatial properties) specified for an interval. Intervals and model parameters may be specific to a color component. Table 1 illustrates the film grain characteristics metadata structure.

**Table 1: film grain characteristics syntax structure used for FGC SEI message**

| | |
|---|---|
| film_grain_characteristics ( payloadSize ) { | Descriptor |
| **fg_characteristics_cancel_flag** | u(1) |
| if( !fg_characteristics_cancel_flag ) { | |
| **fg_model_id** | u(2) |
| **fg_separate_colour_description_present_flag** | u(1) |
| if( fg_separate_colour_description_present_flag ) { | |
| [...] | |
| **}** | |
| **fg_blending_mode_id** | u(2) |
| **fg_log2_scale_factor** | u(4) |
| for( c = 0; c < 3; c++ ) | |
| **fg_comp_model_present_flag**[ c ] | u(1) |
| for( c = 0; c < 3; c++ ) | |
| if ( fg_comp_model_present_flag[ c ] ) { | |
| **fg_num_intensity_intervals_minus1**[ c ] | u(8) |
| **fg_num_model_values_minus1**[ c ] | u(3) |
| for( i = 0; i <= fg_num_intensity_intervals_minus1[ c ]; i++) { | |
| **fg_intensity_interval_lower_bound**[ c ][ i ] | u(8) |
| **fg_intensity_interval_upper_bound**[ c ][ i ] | u(8) |
| for( j = 0; j <= fg_num_model_values_minus1[ c ]; j++ ) | |
| **fg_comp_model_value**[ c ][ i ][ j ] | se(v) |
| } | |
| } | |
| **fg_characteristics_persistence_flag** | u(1) |
| } | |
| } | |

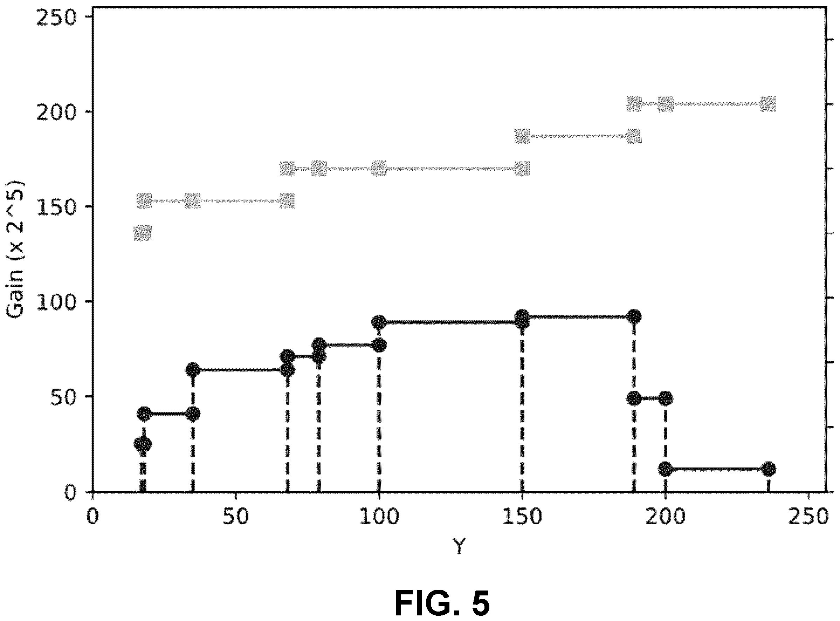

FIG. 5 illustrates example FGC SEI parameters. As film grain may depend on light exposure, the grain may differ in light and dark areas, in terms of amplitude and texture (for example, coarse or fine). The FGC SEI message may have the capability of representing this variability, by determining intensity intervals (e.g., matching, for example, luma values of a decoded picture), and for an interval, grain amplitude and texture properties as illustrated in FIG. 5, where the grain amplitude is represented by black lines with round dots and texture variation (cut-off frequency) is represented by gray lines with square dots, as a function of image luminance, with intervals delimited by dashed lines (e.g., a similar model may be applied to other color components, with (e.g., different) parameters).

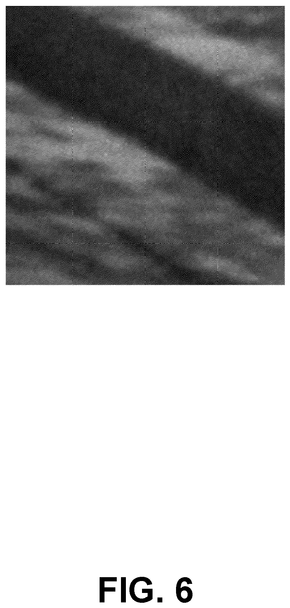

FIG. 6 illustrates an example film scan. FIG. 6 may reproduce part of a film scan where film grain characteristics may differ between shadows and highlights, supporting (e.g., different) model parameters (e.g., including spatial properties) depending on intensity.

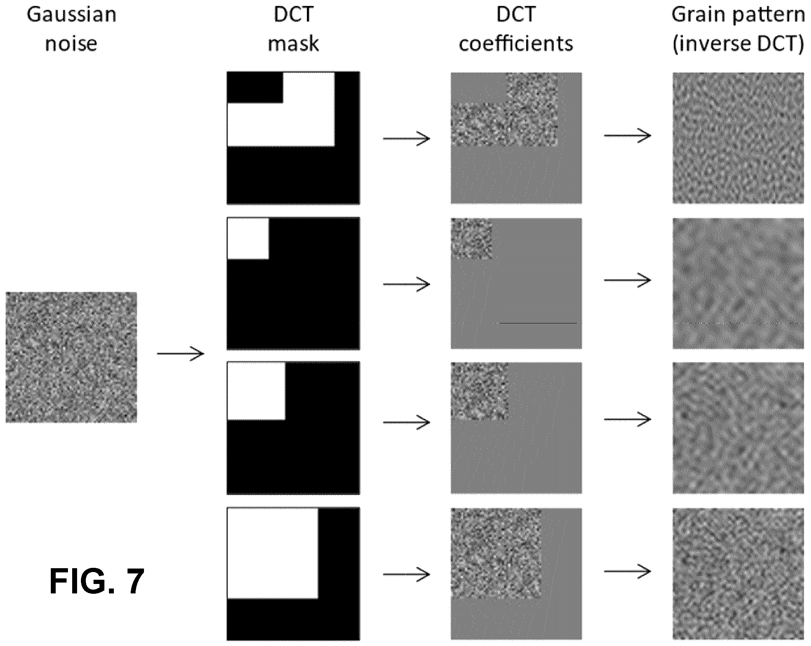

Features described herein may include a frequency filtering model. FIG. 7 illustrates visual examples with cutoff frequencies. The FGC SEI message may define grain texture properties using auto-regressive spatial filter coefficients (e.g., auto-regressive mode) or spatial frequency cutoffs (e.g., frequency filtering mode), applicable to a white Gaussian noise. In frequency-filtering mode, vertical, horizontal, low, and high cutoff frequencies may be specified and transmitted in the bitstream, in addition to grain amplitude (or scaling factor), for an intensity interval. The parameters may represent a hypothetical synthetic grain that may be generated by filling a DCT block with Gaussian random noise of the given amplitude, forcing to zero DCT coefficients out of the given frequency cutoffs, and performing the 2-dimensional inverse DCT. The process may be adapted to different DCT block sizes. Visual examples with a 64×64 DCT block are illustrated in FIG. 7.

Film grain synthesis may be based on Gaussian noise generation, with spatial correlation potentially modeled by frequency limits (for a frequency-based model), and local adaptation that may include adjusting grain amplitude and, optionally, correlation, to target image intensity levels.

Film grain creation may be run for a limited area (e.g., small patches, typically 64×64 samples), further referred to as a template, that may be randomized to generate the full picture of noise. Several such templates may be needed when spatial correlation varies across intensity intervals, for example when film grain shape is not the same across the image on which film grain may be added. Examples may limit the number of templates, by merging the characteristics for different intensity intervals. The limit on the number of templates available may be imposed by memory constraints. Templates may be precomputed and stored for further use (e.g., during an initialization process), or they may be created on-the-fly.

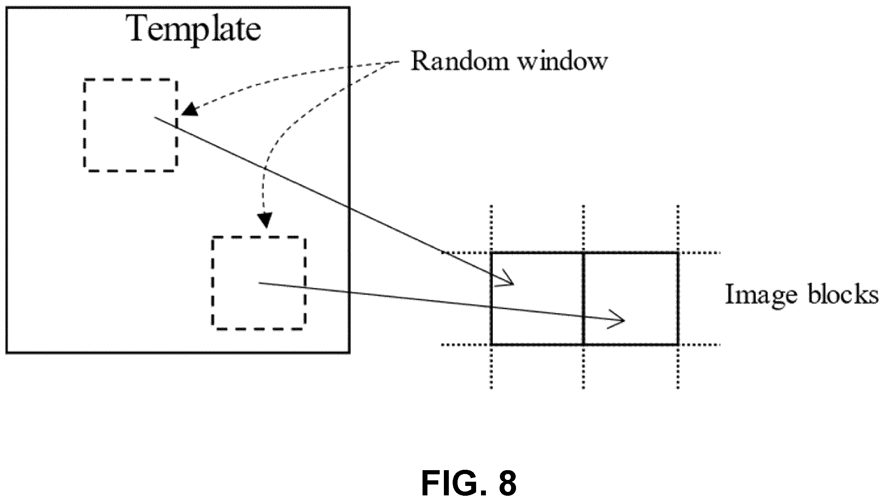

FIG. 8 illustrates example image blocks taking a random window from a template. Template pattern randomization (e.g., extension to the full picture) may be performed by dividing the picture into blocks smaller than the template (e.g., 16×16 or 32×32 blocks compared to a 64×64 template), and by choosing a pseudo-random offset within the template space for the smaller blocks, as illustrated in FIG. 8.

Local adaptation may be based on a local average (e.g., the average intensity of a smaller block). A scaling factor and, optionally, a specific template may be selected depending on the underlying image intensity.

The key model parameters may include the amplitude and spatial correlation of the film grain as a function of the intensity (e.g., luma value) of the source video and the type of spatial correlation model used (e.g., frequency-filtering approach).

The frequency-based model may be described herein. It may be used in video codecs, for example.

In a frequency filtering model, the film grain characteristics may be specified by horizontal and vertical spatial cut-off frequencies. The film grain template (denoted here as G) for a given set of cut-off frequencies may be generated, for example, as follows.

The film grain template for a given set of cut-off frequencies may be generated by generating a two-dimensional array of random-value elements having a normalized Gaussian distribution (e.g., referred to here as n). The two-dimensional array may represent discrete cosine transform (DCT2) coefficients. The column and row indices of the array may represent horizontal and vertical frequencies, respectively. The array size N may be implementation dependent.

The film grain template for a given set of cut-off frequencies may be generated by setting the value of all elements of the random-value DCT2 array to 0 when the corresponding column and row indices are not within the corresponding high and low horizontal and vertical cut-off frequencies (e.g., high and low horizontal and vertical cut-off frequencies may be model parameters). The DC element may be set to zero.

```
n(0,0)=0
        for( y=0; y<N; y++)
          for( x=0; x<N; x++)
           if(( x<low_horizontal && y<low_vertical) ∥
              x>high_horizontal ∥ y>high_vertical )
            n(x,y)=0
```

The inverse discrete cosine transform (IDCT2) of the array as described herein may be calculated to get final film grain template G. $G = IDCT 2 \left(n\right)$

Film grain characteristics may vary depending on exposure, in terms of amplitude and spatial correlation, with the amplitude variation being the most obvious. These variations may be inherent to the image formation process at the physical film level. Replicating them on synthetic grain may make it look natural by anchoring it into the image.

Local adaptation may involve selecting the relevant film grain template and grain amplitude according to sample values (e.g., a local average of the block) and model parameters. For example, a dependency of grain strength/amplitude on the signal intensity may be defined for a color component. Grain correlation parameters may depend on the signal intensity. This may involve the initial stage generating as many film grain templates as needed to fit the model within practical implementation limits. Examples may include using a single template, where local adaptation of grain shape may or may not be supported.

Template selection may be applied on a block basis. Selecting the template on a block basis may help preserve the grain characteristics within the block as long as the grain size is significantly smaller than the block. A local intensity average may be computed to select the relevant template. The template on block boundaries may be associated with deblocking so that the transition is not visible.

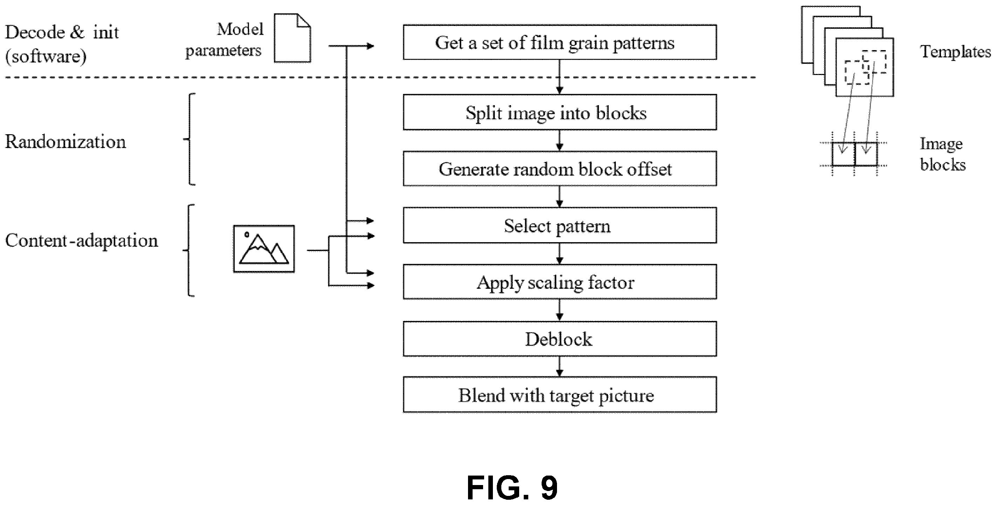

FIG. 9 illustrates an example template-based film grain synthesis workflow. Adaptation of grain amplitude may involve scaling the amplitude of the film grain template selected in the previous step by a scaling factor that depends on local intensity, according to the model. Hereafter, the relationship of grain amplitude to local intensity may be referred to as the scaling function.

Deblocking may be used because of block-based randomization, for example, when grain is large.

The synthesized film grain may be blended with the picture. Multiplicative or additive blending may be performed, followed by appropriate clipping.

Film grain synthesis may be done using a frequency filtering model. Video codecs may specify a fixed point, bit-accurately reproducible process for film grain synthesis that may make use of the FGS SEI message, with the following parameters: Frequency filtering mode may be supported (model_id = 0). Additive blending mode may be supported (blending_mode_id = 0). The range of numbers may be modified (e.g., limited), so that the computation bit depth may be, for example, limited and practical (log2_scale_factor from 2 to 7). Overlaps between intensity intervals may or may not exist. The number of model parameters may be (e.g., limited to) 3, to scale factor and high frequency cut-offs (no low frequency cut-offs, meaning it uses low-pass filtering instead of band-pass, and no cross-component correlation). The scale parameter may be (e.g., limited to) 8 bits, and the frequency cut-offs may be limited to the 2..14 range (full band being 15), meaning template generation may be defined for 16×16 template size. To create a larger template (for example, 64×64), upscaling of the parameters may be required.

The frequency cut-off range may be limited to 13 values in each direction; 169 different templates may exist, which may be stored in a fixed database. 10 (e.g., different) templates may be referenced by a given FGC SEI message (e.g., within a picture).

Local adaptation of both the grain amplitude and spatial frequency limits may be supported by selecting a template and scaling factors based on the average sample value I over smaller blocks (e.g., 8×8, 16×16, or 32×32, non-overlapping), depending on the resolution.

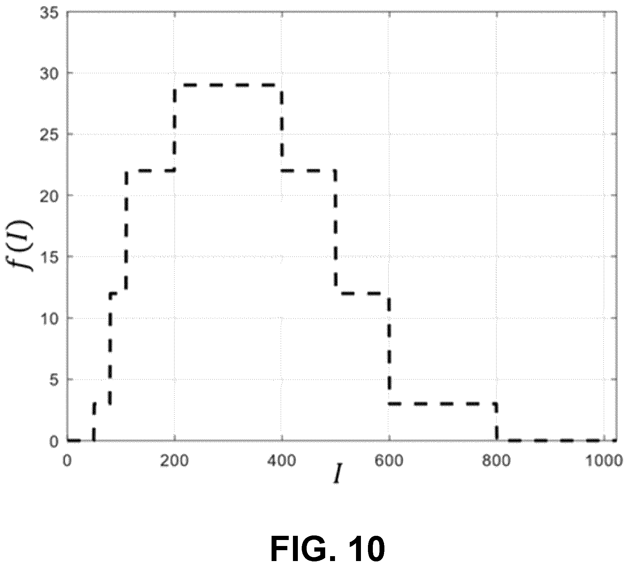

FIG. 10 illustrates an example scaling function f used for local grain amplitude adaptation, making use of the FGC SEI message that may determine constant scaling factors per intensity interval.

A scaling factor LUT may be created, representing the scaling function (for example, see scaling function f(I) in FIG. 10). Since SMPTE RDD 5 and its variants may make use of the FGC SEI that defines constant scaling factors per intensity interval, the scaling function may be a stepwise function, as illustrated in FIG. 10.

An example film grain synthesis may be present in a video coded. The following may be true: a bit depth higher than 8 may be supported by scaling the film grain appropriately (e.g., for 10-bit video, film grain may be shifted left by 2 bits before blending); and/or the VTM 64×64 inverse DCT2 transform may be used for template generation.

The example film grain synthesis may use resolution-adaptive local adaptation blocks: 8×8 up to HD resolution; 16×16 up to UHD resolution; and 32×32 above UHD resolution. The randomization blocks may be enlarged to 32×32.

By estimating model parameters, a film grain look may be obtained at the user (decoder) side. By doing that, the initial appearance of the video may be preserved while using lower bitrates.

The film grain analysis process may be applied on the encoder side and may be a non-normative process regardless of the synthesis method and standard in use. Film grain analysis may be implemented as pre-processing or as part of encoding. Ultimately, film grain analysis may provide indicative features of the film grain in accordance with the selected parameterized model and supported metadata. Film grain analysis may determine film grain model parameters to be sent in the appropriate metadata mechanism (e.g., in an SEI message) to enable content-aware decoder-side film grain synthesis.

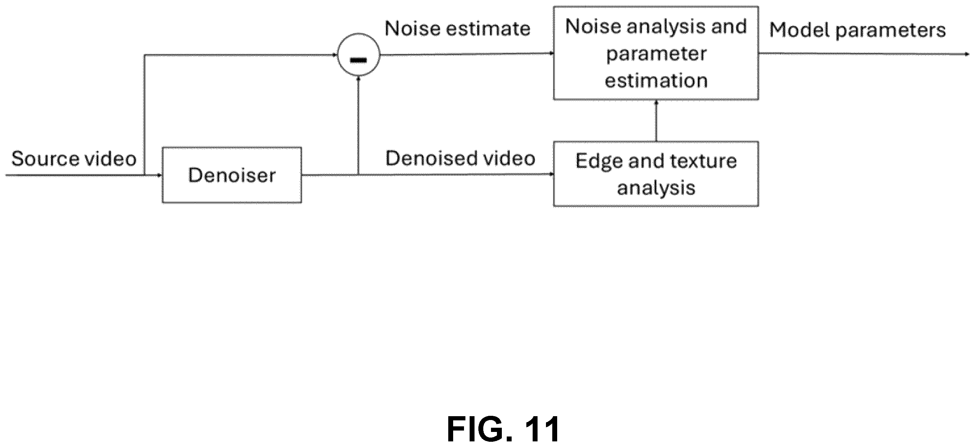

FIG. 11 illustrates an example film grain analysis and parameter estimation. FIG. 11 depicts a simplified framework for film grain analysis. As an input to the process, besides the grainy source video, the denoised representation may also be used. Edge and complex texture analysis may be performed to determine a map of flat and non-flat regions in the scene. Edge and complex texture analysis may be done because high-frequency components, such as edges and texture, may interfere with the analysis process of the film grain, which may reside in high frequencies. Film grain analysis workflow may include the following.

Film grain analysis may be film grain model-independent and include the following. Pre-processing may produce a noise estimate (e.g., a film grain image). This approach may include denoising the video and finding the difference between source and denoised pairs to obtain a noise estimate (e.g., film grain image). Pre-processing may produce information about the characteristics of the input video, such as edge and texture analysis.

Film grain analysis may be film grain model-specific and include the following. A film grain analysis and parameter estimation step may determine model parameters based on the outputs from the model-independent steps. Grain amplitude may be estimated based on underlying picture intensity. Frequency limits (cut-off frequencies) for a frequency-based model or auto-regressive parameters may be estimated on relevant picture intensity levels.

Film grain analysis and parameter estimation may depend on the selected parameterized model. In video distribution systems, denoising may be used. In some examples, a reconstructed video sequence may be used, reducing the need for a denoised sequence in film grain estimation. Depending on the quantization parameter, a reconstructed sequence may closely approximate a denoised sequence by preserving most details but removing high frequencies (e.g., noise). After denoising, film grain images that represent noise estimates may be generated by computing the difference between original input frames and filtered or denoised frames that correspond to the same time instance.

Edge and texture analysis is described herein. Since denoising may alter picture details in addition to noise, the film grain image resulting from the difference of source and denoised pictures may include more than film grain in textured or edge areas. Avoiding those areas and estimating film grain parameters on flat (e.g., textureless) regions may be preferable. Examples may include an edge detection algorithms such as a canny edge detector and morphological operations. The film grain image and map of flat regions may be provided to the noise analysis and parameter estimation module.

Grain amplitude may be estimated. Since film grain may depend on the local characteristics of an image, a (e.g., different) amplitude of film grain may be applied for (e.g., different) intensities or intensity intervals of an input image. The relationship between local image intensity and grain amplitude, referred to here as the scaling function, may be determined by analyzing the film grain image (e.g., noise estimate), the filtered image, and the flat-region map produced during pre-processing. For example, the scaling function may be represented as a polynomial function. A lower-degree approximation of a (e.g., polynomial) scaling function may be considered, depending on the example. A piecewise linear function or stepwise constant scaling function may also be considered examples.

The analysis may be performed on a grid of non-overlapping blocks that belong to a flat region, as determined by the edge and texture analysis stage. For a block, the following features are computed: a feature may include the average intensity of the block in the denoised image, and a feature may include the noise level (e.g., standard deviation) of the block in the film grain image. This may lead to a set of pairs, referred to here as observation points or data points, which may be used in further analysis.

A scaling function may be obtained by fitting a polynomial function to the observation points. Some additional processing of the observation points may be used before fitting the function, for example, to remove outliers and to improve estimated function precision.

In examples, an image may be analyzed by blocks of different sizes depending on resolution: 8×8 for HD and below, 16×16 up to UHD, and 32×32 above. The following process may operate on observation points collected, as described herein.

The noise level may be scaled by a factor of 3 (e.g., a correction factor resulting from imperfect denoising, underestimating amplitude in the noise estimate image) and quantized, resulting in grain strength.

Data-points with grain strength higher than 16 « (bitDepth-8) may be discarded to limit the data to meaningful values (e.g., discarding potential outliers). If grain strength is higher than the maximum defined value, the noise estimate may be biased by other high-frequency components that are removed during denoising.

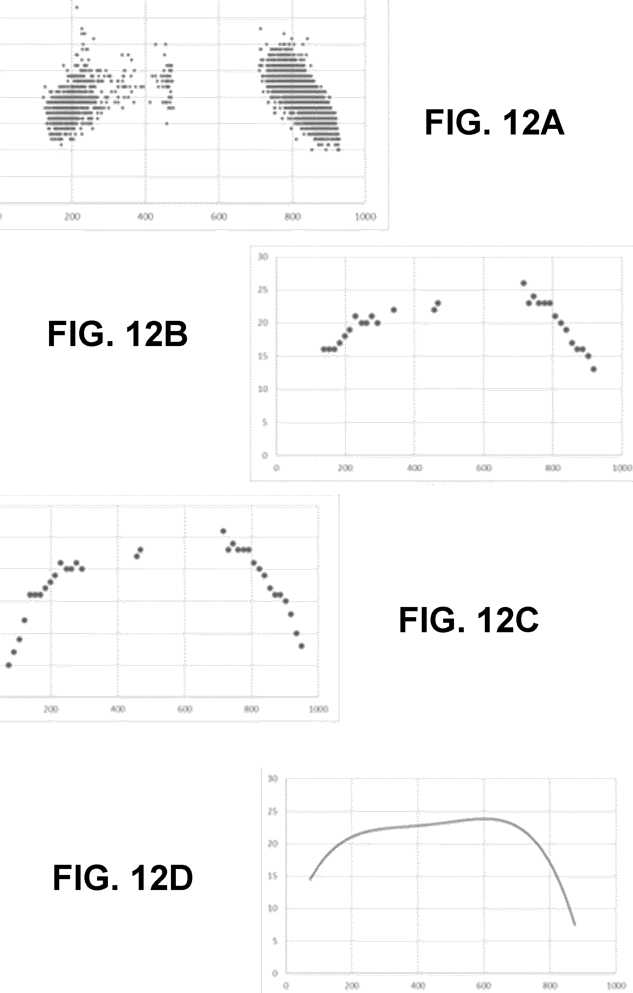

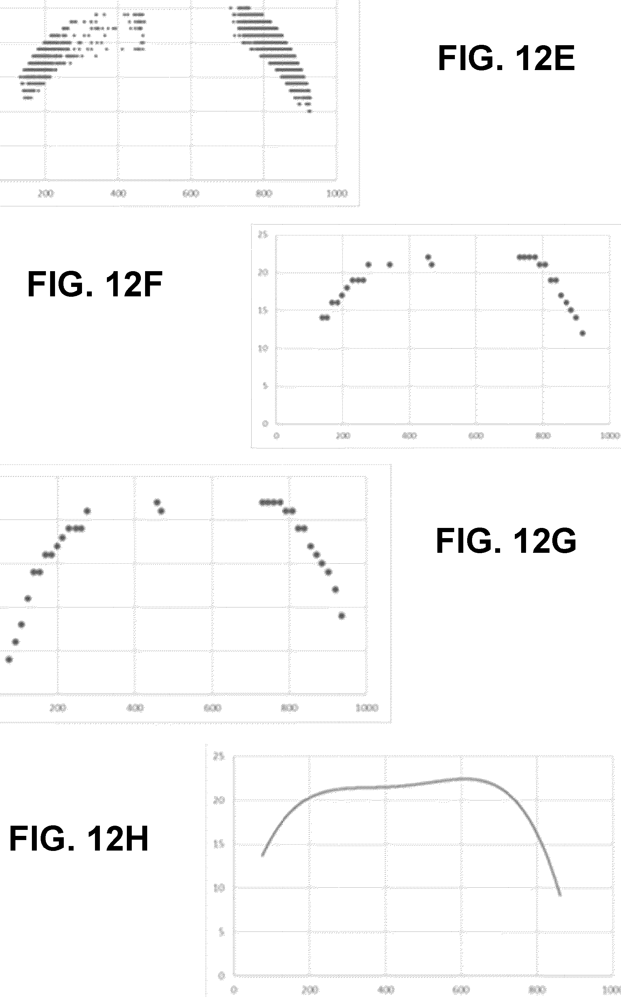

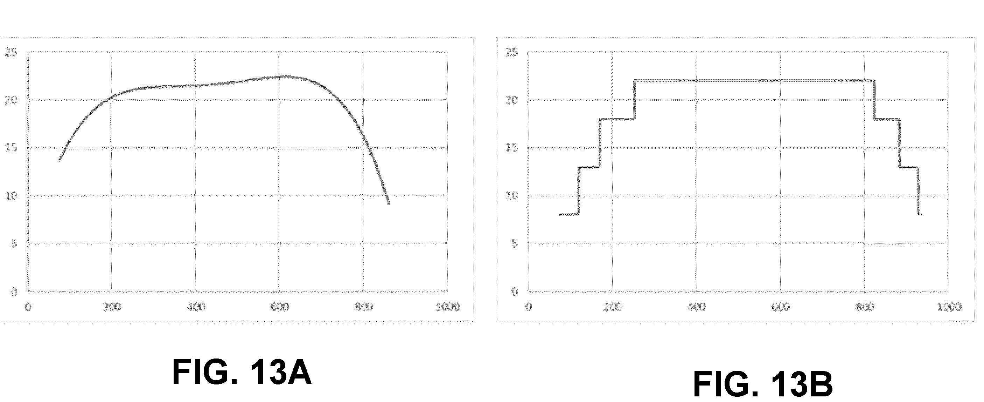

FIG. 12 illustrates an example two-pass curve fitting process. The remaining data-points may be used to determine the film grain scaling function. Data-points may be used to fit a fourth-degree polynomial curve by using a two-pass curve fitting process, as illustrated in FIG. 12. FIG. 13 illustrates an example fitted curve (a) and a quantized curve (b). The fitted curve may be quantized to produce a stepwise function, as illustrated in FIG. 13.

FIG. 12A shows data-points obtained from the previous steps. Sub-interval averaging may be performed, where a complete intensity dynamic range may be uniformly quantized into non-overlapping intervals of size 16. Data points may be averaged and replaced by a single data point per sub-interval. The average value may be calculated if the minimum number of points within the sub-interval is Nₘᵢₙ≥8. The interval may (e.g., otherwise) be considered empty. The process and result of sub-interval averaging is illustrated in FIG. 12B.

Potential outliers (1st pass) may be discarded. If a data point is isolated (e.g., if there is no data-point corresponding to the previous or the following sub-interval), that data-point may be considered an estimation error and removed from further calculations. For example, see the missing point in FIG. 12C compared to FIG. 12D. This approach may be used in corner cases, for example if a single point appears at an intensity interval where film grain is not present.

Extreme points may be extrapolated. A step of extrapolation of data-points may be applied to smooth transitions from intensities with film grain to intensities without film grain. The process may locate the left-most and right-most non-empty sub-intervals and extend the data-point range (e.g., see the added points in FIG. 12C). Four points (sub-intervals) (e.g., at most four points) may be added to the left and to the right.

Discarding potential outliers (2nd pass) may be performed. Outliers with respect to intensity (horizontal axis) may be discarded as follows: points corresponding to intensity lower than 40 or larger than 950 (e.g., for 10-bit signals, the values may be shifted for bit depths) may be discarded.

Features described herein may include curve fitting (1st pass). A parametric curve may be fitted by using fourth-order polynomial fitting, as shown in FIG. 12D, completing the first-pass fitting.

Potential outliers (3rd pass) may be discarded. Data-points that are too far away from the first fitted curve may be discarded as follows. The process may compute the RMSE (e.g., square root of the mean of square errors) of the initial data points from FIG. 12A with respect to the fitted curve:
$RMSE = \sqrt{\frac{1}{N} {\sum }_{i = 0}^{N - 1} {\left({y}_{i}-f\left({x}_{i}\right)\right)}^{2}}$, where N is total number of data-points. Initial data-points which fall outside bounds of +0.6 times the RMSE (*yᵢ > f*(*xᵢ*) + 0.6 · *RMSE*) and -1.2 times the RMSE (*yᵢ* < *f*(*xᵢ*) *-* 1.2 · *RMSE*) around the first fitted curve may be filtered out. This may filter out remaining outliers and biased data-points. The bound above the curve may be smaller than the one below, as this may avoid overestimating the film grain strength. The resulting data points are illustrated on FIG. 12E.

Features described herein may include curve fitting (2nd pass). The remaining data-points may proceed to second-pass curve fitting. Processes described herein may be repeated, and a polynomial curve may be fitted, for example, using a reduced set of data-points as input (see FIGS. 12E-G compared to FIGS. 12A-C). The resulting scaling function is illustrated in FIG. 12H.

A final scaling function approximation may be used. As illustrated in FIG. 13, the scaling function represented by the fourth-order polynomial curve may be approximated with a simplified stepwise function. The stepwise function may be derived by using Lloyd-max non-uniform quantization with four quantization levels. The quantizer may be adapted (e.g., trained) on-the-fly for each updated set of points. For a frame, based on the observation points, a scaling function may be obtained. Parts of the stepwise function may represent an (e.g., one) intensity interval in the output FGC SEI message, along with the corresponding lower and upper bound and scaling factor value.

Analysis may be performed (e.g., in the same way) for the color components independently. Cut-off frequencies may be estimated for a frequency filtering model. The noise estimate image may be scanned using a grid of non-overlapping 64×64 blocks. For a block within a flat region, a forward 64×64 DCT-2 transform may be applied. A coefficient resulting from the transform may be squared. An average squared transformed block B_{avg} may be computed over available squared transformed blocks Bᵢ (e.g., sample-wise) as: ${B}_{avg} \left(x, y\right) = \frac{1}{K} {\sum }_{i = 0}^{K - 1} {B}_{i} \left(x, y\right)$ where K is the number of blocks used for the calculations, e.g., (e.g., all) blocks belonging to the one intensity interval. Thereafter, the average of columns B_{c} and of rows Bᵣ (average vectors) are calculated: ${B}_{c} \left(y\right) = \frac{1}{N - 1 + \left(y>0\right) ? 1 : 0} {\sum }_{i = \left(y>0\right) ? 0 : 1}^{N - 1} {B}_{avg} \left(i, y\right)$ ${B}_{r} \left(x\right) = \frac{1}{N - 1 + \left(x>0\right) ? 1 : 0} {\sum }_{i = \left(x>0\right) ? 0 : 1}^{N - 1} {B}_{avg} \left(x, i\right)$

The average vectors may be regularized to suppress peaks. The average vectors may be used to find intersection points with the total average value of the block B_{avg} ( $Avg = \frac{1}{N * N} {\sum }_{i = 0}^{N - 1} {\sum }_{j = 0}^{N - 1} {B}_{avg} \left(i, j\right)$). The Avg may be used as a threshold for computations. Based on the analysis of the intersection point(s), here denoted as y_{cut} and x_{cut}, of the B_{c} and Bᵣ with the threshold (Avg), cut-off frequencies may be obtained.

Adjustments may be made to conform to the FGC SEI message semantics that uses 16x16 arrays to define film grain template (e.g., compared to 64x64 arrays in the proposed implementation):$fg_comp_model_value \left[c\right] \left[i\right] \left[1\right] = Clip 3 \left(2,14,\left({x}_{cut}-1\right)>>2\right)$$fg_comp_model_value \left[c\right] \left[i\right] \left[2\right] = Clip 3 \left(2,14,\left({y}_{cut}-1\right)>>2\right)$ where i is the interval, and c is the colour component. This may be used to align with the FGC SEI semantics.

This process may be repeated to estimate frequency limits for different intensity intervals, as permitted by FGC SEI, and may be used to accurately model film grain.
If no intersection points are found, film grain may be considered absent from the input frame. If the analysis process determines that no grain is present in the source video, the appropriate syntax element values may be set to indicate that synthesis is not performed. The same process may be performed for (e.g., all) color components independently.

Film grain analysis tools implemented in the reference software models may rely on image processing techniques to estimate grain parameters from grainy and clean image pairs. However, the film grain analysis tools may struggle to accurately capture film grain characteristics. Examples herein may be provided to improve the film grain analysis process (e.g., for estimating a scaling function). The film grain analysis process may be improved by providing the most accurate possible film grain characteristics. The film grain analysis process may be improved by matching the film grain characteristics and improving the fidelity of the film grain compared to the original film grain (e.g., present in the source video).The film grain characteristics may be provided in the format of FGC SEI or AFGS1 (e.g., given a grainy video content). Examples herein may improve the scaling function estimation by using (e.g., storing) information from the previous frames and by aggregating the data points over time (e.g., across pictures or frames over time).

Examples of scaling function estimation are provided herein. When estimating a scaling function, the process may be performed from picture to picture (e.g., frame to frame) independently. This may not be the optimal approach.

In example scaling factor estimations (e.g., as implemented in the VTM and the HM reference software), two-pass curve fitting processes and quantization of the fitted curves to estimate final scaling function may be used. To fit the curve, only data points collected from the current picture (e.g., current frame) may be used. After fitting the curve during two-pass fitting (e.g., as described herein), the analysis process may perform averaging of the fitted curve with the fitted curve from the previous picture (e.g., previous frame). This approach may not be optimal and may not lead to precise estimations.

In examples, a scaling factor estimation improvement is proposed. Data points may be stored from one picture (e.g., one frame) to be used in the next picture (e.g., next frame) (e.g., instead of averaging the two curves). Aggregation of data points may be performed over time (e.g., over the pictures). For every picture (e.g., each new picture), data points are aggregated (e.g., accumulated, gathered) and stored with previously stored data points from previous picture(s) (e.g., aggregated film grain characteristics data associated with a plurality of previous picture(s)). Aggregated data points (e.g., aggregated film grain characteristics data) may be used in the film grain analysis along with the set of data points coming from the current picture (e.g., current film grain characteristics data associated with the current picture). Estimating a scaling function (e.g., as described herein) may be based on the film grain analysis (e.g., may be the result of the film grain analysis).

A video processing device (e.g., a video pre-processing device or video encoding device) may obtain current film grain characteristics data associated with a current picture. The video processing device may obtain aggregated film grain characteristics data associated with a plurality of previous pictures. A film grain model (e.g., which may include a plurality of film grain model parameter(s)) may be determined for the current picture based on the current film grain characteristics data associated with a current picture and the aggregated film grain characteristics data associated with a plurality of previous pictures. The video processing device may include an indication (e.g., within a video bitstream and/or within a supplement enhancement (SEI) message) of the determined film grain model for the current picture. In examples, the video processing device may combine the aggregated film grain characteristics data with the current film grain characteristics data. The film grain analysis (e.g., the scaling function estimation) may be performed based on the combined film grain characteristics data. The film grain model for the current picture may be determined based on the film grain analysis.

In examples, there may be no need to directly store all data points as storing all the data points may require a lot of resources. Instead, sub-interval averaging of data points may be applied to store data and use the data points in subsequent frames. Aggregated film grain characteristics data (e.g., associated with previous picture(s)) may include aggregated film characteristics data associated with a number of sub-intervals. For example, aggregated film grain characteristics data may include first sub-interval aggregated film grain characteristics data and second sub-interval aggregated film grain characteristics data. Sub-interval division of the current film grain characteristics data may be performed for a number sub-intervals associated with the current picture. For example, sub-interval division of the current film grain characteristics data may be used to generate first sub-interval current film grain characteristics data and second sub-interval current film grain characteristics data. The combined film grain characteristics data may be constructed by adding the first sub-interval current film grain characteristics data to the first sub-interval aggregated film grain characteristics data and the second sub-interval current film grain characteristics data to the second sub-interval aggregated film grain characteristics data. A complete intensity dynamic range may be uniformly quantized into non-overlapping intervals when performing sub-interval division (e.g., as described in previous sections). The film grain characteristics data may be stored for future use on sub-interval basis.

In examples, at least one of the sum of a plurality of intensities (e.g., all intensities (x-axis as shown in FIGs. 12A-12H)), a sum of a plurality of grain strengths (e.g., all grain strengths (y-axis)), the average of a plurality of intensities, the average of a plurality of grain strengths, or a number of data points within sub-intervals (e.g., within each sub-interval) may be stored for future use. When processing a picture (e.g. current picture), aggregated stored data associated with previously picture(s) may be added to the current picture data. For example, for sub-intervals (e.g., each sub-interval), at least one of a stored sum of intensities (x-axis), a stored sum of grain strengths (y-axis), an average of intensities, or an average of grain strengths may be added to at least one the current picture sum intensities, current picture average intensities, current picture sum grain strengths, or current picture average grain strengths. A stored number of elements may (e.g., may also) added to the current number of elements (e.g., at the same time) for sub-intervals (e.g., each sub-interval). The processing may then be done as described herein (e.g., the film grain analysis and the scaling function may be estimated).

In examples, for sub-intervals (e.g., each sub-interval), at least one of a stored an average of intensities (e.g., an aggregated average of intensities), an average of grain strengths (e.g., an aggregated average of grain strengths), or a stored number of elements (e.g., an aggregated stored number of elements) may be used to recover aggregated sum of stored intensities and aggregated sum of stored grain strengths by multiplying stored aggregated average values by the stored aggregated number of elements (e.g., number of data). For example, for sub-intervals (e.g., each sub-interval), at least one of a recovered aggregated stored sum of intensities and a recovered aggregated stored sum of grain strengths may be added to at least one the current picture sum intensities and current picture sum grain strengths. A stored (e.g., aggregated) number of elements may (e.g., may also) added to the current number of elements (e.g., at the same time) for sub-intervals (e.g., each sub-interval). The processing may then be done as described herein (e.g., the film grain analysis and the scaling function may be estimated).

In examples, first sub-interval current film grain characteristics data include at least one of a first current average of a plurality of intensities, a first current average of a plurality of grain strengths, a first current sum of a plurality of grain strengths, a first current sum of a plurality of intensities, or a first current number of data. In examples, second sub-interval current film grain characteristics data include at least one of a second current average of a plurality of intensities, a second current average of a plurality of grain strengths, a second current sum of a plurality of grain strengths, a second current sum of a plurality of intensities, or a second current number of data. The first sub-interval aggregated film grain characteristics data may include at least one of a first aggregated average of plurality of intensities, a first aggregated average of a plurality of grain strengths, a first aggregated sum of a plurality of grain strengths, a first aggregated sum of a plurality of intensities, or a first aggregated number of data. The second sub-interval aggregated film grain characteristics data may include at least one of a second aggregated average of plurality of intensities, a second aggregated average of a plurality of grain strengths, a second aggregated sum of a plurality of grain strengths, a second aggregated sum of a plurality of intensities, or a second aggregated number of data.

The combined film grain characteristics may be constructed by adding a first aggregated number of data to the first current number of data and adding the second number of data to the second current number of data. The combined film grain characteristics may be constructed by adding the first aggregated average of the plurality of intensities to the first current average of the plurality of intensities and the first aggregated average of the plurality of grain strengths to the first current average of the plurality of grain strengths and by adding the second aggregated average of the plurality of intensities to the second current average of the plurality of intensities and the second aggregated average of the plurality of grain strengths to the second current average of the plurality of grain strengths. The combined film grain characteristics may be constructed by adding the first aggregated sum of the plurality of grain strengths to the first current sum of the plurality of grain strengths and the first aggregated number of data to the first current number of data and by adding the second aggregated sum of the plurality of grain strengths to the second current sum of the plurality of grain strengths and the second aggregated number of data to the second current number of data. The combined film grain characteristics may be constructed by adding the first aggregated sum of the plurality of intensities to the first current sum of the plurality of intensities and the first aggregated number of data to the first current number of data and by adding the second aggregated sum of the plurality of intensities to the second current sum of the plurality of intensities and the second aggregated number of data to the second current number of data.

In examples, data-points may be first averaged and replaced by a single data-point per sub-interval. Average values per sub-interval (e.g., mean intensity and mean grain strength of a plurality of points (e.g., all points) from a sub-interval) and a number of data (e.g., data points) in that sub-interval (e.g., that figurate in the mean) may be (e.g., may then be) stored for future use. This may be done for a number of sub-intervals (e.g., for each sub-interval or for all sub-intervals). When processing a picture, stored data may be first used to recover sum of intensities and sum of grain strengths per sub-interval (e.g., per each sub-interval) by multiplying stored average (e.g., mean) values associated with a sub-interval (e.g., associated with each sub-interval) by the number of data (e.g., data points) associated with a sub-interval (e.g., associated with each sub-interval) that figurate in that mean. Recovered data may then be added to the current picture film grain characteristics data (e.g., added to current film grain characteristics data associated with each sub-interval of the current picture). For example, a current number of data points of a sub-interval is added to the stored number of data points for that sub-interval. Recovered intensities and grain strengths may be added to the current values for a sub-interval (e.g., for each-sub interval or for all sub-intervals). The processing may then be done as described herein (e.g., the film grain analysis and the scaling function may be estimated).

In examples, a first number of data associated with the first sub-interval aggregated film grain characteristics data may be determined and a second number of data associated with the second sub-interval aggregated film grain characteristics may be determined. A first average value of the first sub-interval aggregated film grain characteristics data may be determined and a second average value of the second sub-interval aggregated film grain characteristics data may be determined. The first average value and the second average value may be stored in the reference buffer. The first number of data and the second number of data may be stored in the reference buffer.

In examples, the stored first average value may be multiplied by the stored first number of data and the stored second average value may be multiplied by the stored second number of data. The combined film grain characteristics may be constructed by adding the multiplied values of the first sub-interval aggregated film grain characteristics data and the stored first number of data to the first sub-interval current film grain characteristics data and by adding the multiplied values of the second sub-interval aggregated film grain characteristics data to the second sub-interval current film grain characteristics data.

In examples, storing of current data for future use may be done before adding previously stored data. As such, only data from the current picture may be stored and used in the following picture. In examples, storing of the data may be done after adding previously stored data to the current picture data. As such, aggregation (e.g., accumulation) of the data over previous frames may be accomplished.

In examples, storing may be done before second pass curve fitting. This may mean that the video processing device uses initial data points before filtering some of the potential outliers. For example, storing may be done based on the data points illustrated in FIG. 12A. In examples, storing may be done after first-pass curve fitting and after discarding some potential outliers. For example, storing may be done based on the data points illustrated in FIG. 12E. Interaction with two pass curve fitting and filtering outliers may be used (e.g., to store data from the first pass and/or to store data from the second pass for the future use). In examples, stored data may be added during the first-pass curve fitting. In examples, stored data may be added during the second-pass curve fitting. In examples, stored data may be added during the first-pass curve fitting process and during the second-pass curve fitting process.

In examples, there may be no need to use and/or may be no need to store intensity or mean intensity of data points within sub-interval(s). Instead, an approximation may be used and/or may be stored. For example, intensities of a data point(s) (x-axis value(s)) may be approximated by a default value. The default value may be defined per sub-interval(s). The default value may be approximated by the center (e.g., central intensity) of a sub-interval. The real (e.g., calculated) intensity of data point(s) (e.g., x-axis value(s)) may be used to associate data point(s) with the sub-interval(s). The real (e.g., calculated) intensity of the data point(s) may (e.g., may then) be replaced by the default value. The mean intensity of data points within sub-interval(s) may (e.g., may then) be replaced by the default value. The processing may then be done as described herein (e.g., the film grain analysis and the scaling function may be estimated) using the default value.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A video processing device, comprising:
a processor configured to:
obtain current film grain characteristics data associated with a current picture;
obtain aggregated film grain characteristics data associated with a plurality of previous pictures;
determine a film grain model for the current picture based on the current film grain characteristics data associated with a current picture and the aggregated film grain characteristics data associated with a plurality of previous pictures; and
include an indication of the determined film grain model for the current picture.

2. A method associated with a video processing device, the method comprising:
obtaining current film grain characteristics data associated with a current picture;
obtaining aggregated film grain characteristics data associated with a plurality of previous pictures;
determining a film grain model for the current picture based on the current film grain characteristics data associated with a current picture and the aggregated film grain characteristics data associated with a plurality of previous pictures; and
including an indication of the determined film grain model for the current picture.

3. The video processing device of claim 1 or the method of claim 2, wherein the processor of claim 1 is further configured to perform, or the method of claim 2 further comprises:
combining the aggregated film grain characteristics data with the current film grain characteristics data; and
performing film grain analysis based on the combined film grain characteristics data, wherein the film grain model for the current picture is determined based on the film grain analysis.

4. The video processing device of claim 3 or the method of claim 3, wherein the aggregated film grain characteristics data comprises first sub-interval aggregated film grain characteristics data and second sub-interval aggregated film grain characteristics data, and wherein processor of claim 3 is further configured to perform, or the method of claim 3 further comprises:
performing sub-interval division of the current film grain characteristics data associated with the current picture to generate first sub-interval current film grain characteristics data and second sub-interval current film grain characteristics data.

5. The video processor device of claim 4 or the method of claim 4, wherein the processor of claim 3 is further configured to perform, or the method of claim 4 further comprises:
constructing the combined film grain characteristics data by adding the first sub-interval current film grain characteristics data to the first sub-interval aggregated film grain characteristics data and the second sub-interval current film grain characteristics data to the second sub-interval aggregated film grain characteristics data.

6. The video processing device of claim 5 or the method of claim 5, wherein processor of claim 5 is further configured to perform, or the method of claim 5 further comprises:
determining a first number of data associated with the first sub-interval aggregated film grain characteristics data and a second number of data associated with the second sub-interval aggregated film grain characteristics, wherein the first number of data and the second number of data are stored in a reference buffer; and
determining a first average value of the first sub-interval aggregated film grain characteristics data and a second average value of the second sub-interval aggregated film grain characteristics data, wherein the first average value and the second average value are stored in the reference buffer.

7. The video processing device of claim 6 or the method of claim 6, wherein the processor of claim 6 is further configured to perform, or the method of claim 6 further comprises:
multiplying the stored first average value by the stored first number of data and multiplying the stored second average value by the stored second number of data; and
constructing the combined film grain characteristics data by:
adding the multiplied values of the first sub-interval aggregated film grain characteristics data and the stored first number of data to the first sub-interval current film grain characteristics data and adding the multiplied values of the second sub-interval aggregated film grain characteristics data to the second sub-interval current film grain characteristics data.

8. The video processing device of claim 4 or the method of claim 4, wherein:
the first sub-interval current film grain characteristics data comprises a first current average of a plurality of intensities and a first current average of a plurality of grain strengths,
the second sub-interval current film grain characteristics data comprises a second current average of a plurality of intensities and a second current average of a plurality of grain strengths,
the first sub-interval aggregated film grain characteristics data comprises a first aggregated average of plurality of intensities and a first aggregated average of a plurality of grain strengths,
the second sub-interval aggregated film grain characteristics data comprises a second aggregated average of plurality of intensities and a second aggregated average of a plurality of grain strengths, and
the processor of claim 4 is further configured to perform, or the method of claim 4 further comprises:
constructing the combined film grain characteristics data by:
adding the first aggregated average of the plurality of intensities to the first current average of the plurality of intensities and the first aggregated average of the plurality of grain strengths to the first current average of the plurality of grain strengths, and
adding the second aggregated average of the plurality of intensities to the second current average of the plurality of intensities and the second aggregated average of the plurality of grain strengths to the second current average of the plurality of grain strengths.

9. The video processing device of claim 4 or the method of claim 4, wherein:
the first sub-interval current film grain characteristics data comprises a first current sum of a plurality of grain strengths and a first current number of data,
the second sub-interval current film grain characteristics data comprises a second current sum of a plurality of grain strengths and a second current number of data,
the first sub-interval aggregated film grain characteristics data comprises a first aggregated sum of plurality of grain strengths and a first aggregated number of data,
the second sub-interval aggregated film grain characteristics data comprises a second aggregated sum of plurality of grain strengths and a second aggregated number of data, and
the processor of claim 4 is further configured to perform, or the method of claim 4 further comprises:
constructing the combined film grain characteristics data by:
adding the first aggregated sum of the plurality of grain strengths to the first current sum of the plurality of grain strengths and the first aggregated number of data to the first current number of data, and
adding the second aggregated sum of the plurality of grain strengths to the second current sum of the plurality of grain strengths and the second aggregated number of data to the second current number of data.

10. The video processing device of claim 4 of the method of claim 4, wherein:
the first sub-interval current film grain characteristics data comprises a first current sum of a plurality of intensities and a first current number of data,
the second sub-interval current film grain characteristics data comprises a second current sum of a plurality of intensities and a second current number of data,
the first sub-interval aggregated film grain characteristics data comprises a first aggregated sum of plurality of intensities and a first aggregated number of data,
the second sub-interval aggregated film grain characteristics data comprises a second aggregated sum of plurality of intensities and a second aggregated number of data, and
the processor of claim 4 is further configured to perform, or the method of claim 4 further comprises:
constructing the combined film grain characteristics data by:
adding the first aggregated sum of the plurality of intensities to the first current sum of the plurality of intensities and the first aggregated number of data to the first current number of data, and
adding the second aggregated sum of the plurality of intensities to the second current sum of the plurality of intensities and the second aggregated number of data to the second current number of data.

11. The video processing device of claim 4 or the method of claim 4, wherein:
the first sub-interval current film grain characteristics data comprises a first current number of data,
the second sub-interval current film grain characteristics data comprises a second current number of data,
the first sub-interval aggregated film grain characteristics data comprises a first aggregated number of data,
the second sub-interval aggregated film grain characteristics data comprises a second aggregated number of data, and
the processor of claim 4 is further configured to perform, or the method of claim 4 further comprises:
constructing the combined film grain characteristics data by:
adding the first aggregated number of data to the first current number of data, and
adding the second number of data to the second current number of data.

12. The video processing device of claim 3 or the method of claim 3, wherein the film grain model comprises a plurality of film grain model parameters.

13. The video processing device of claim 3 or the method of claim 3, wherein the processor of claim 3 is further configured to perform, or the method of claim 3 further comprises:
estimating a scaling function based on the film grain analysis.

14. The video processing device of claim 1 or the method of claim 2, wherein the indication of the determined film grain model for the current picture is included within a video bitstream.

15. The video processing device of claim 1 or the method of claim 2, wherein the indication of the determined film grain model for the current picture is included within a supplemental enhancement information (SEI) message.
